# EUROPEAN PATENT APPLICATION

(11) **EP 3 386 204 A1**
(43) Date of publication of application: **10.10.2018**
(21) Application number: 17305403.2
(22) Date of filing: 04.04.2017
(51) Int. Cl.: H04N 21/422, H04N 21/4223, H04N 21/431, H04N 21/4725

(54) **DEVICE AND METHOD FOR MANAGING REMOTELY DISPLAYED CONTENTS BY AUGMENTED REALITY**

(71) Applicant: Thomson Licensing, 92130 Issy-les-Moulineaux (FR)
(72) Inventor: BAILLARD, Caroline, 35576 Cesson Sévigné (FR); FRADET, Matthieu, 35576 Cesson Sévigné (FR); LAURENT, Anthony, 35576 Cesson Sévigné (FR)
(74) Representative: Vidon Brevets & Stratégie

(57) **Abstract**

First contents displayed on a screen set are managed by using a management apparatus associated with at least one sensor (31) and at least one second screen (33). A joint visualization (23) on the second screen(s) of the screen set with at least one virtual content (22) corresponding to the first contents, is controlled from images (21) captured by the sensor(s), a layout of the virtual content(s) being adapted so that at least part of the virtual content(s) is visualized external to the screen set. An environment external to the screen set and depending on a user position is analyzed on the captured images, and the layout is adapted in function of the analyzed environment, including in function of at least one real object.
Applications to augmented or mixed reality and to television remote control.

## Description

### 1. TECHNICAL FIELD

The invention relates to the domain of remote display content management using a Graphical User Interface (GUI), notably for television (TV) remote control. More precisely, it pertains to the field of remote management exploiting Augmented Reality (AR).

### 2. BACKGROUND ART

A common way of controlling a TV content using a GUI is to use the TV screen as a main visual interface and to navigate through it by means of a standard TV remote control. However, such a controlling interferes with ongoing programs that cannot be displayed at the same time, or can only be displayed partly or with a reduced size.

Alternative solutions are based on "second screen" applications, exploited for controlling a TV set or a connected set-top box (STB). They are usually based on wireless transmissions such as with WiFi technologies, and can allow notably channel switching and Electronic Program Guide (EPG) browsing. Advantages compared with a traditional remote control include not having to alter a current program, and being able to control the TV from a large distance even if not in front of the TV set - further to mitigating the risks of remote control loss.

Among solutions developed in that field of second screen remote control, some of them provide services to users beyond mere information on programs. Such services can include browsing additional information or statistics, performing online purchase, and discussing with a community.

However, they require having to look at the second screen, whether a tablet or a smartphone, in order to get information or to access the TV contents. Consequently, the TV screen is no longer in the user's field of view, so that the TV screen and the second screen provide two spatially disconnected worlds.

In order to overcome that issue, it has been proposed to exploit a GUI using Augmented Reality (AR). AR applications refer to a live view of a real-world environment whose elements are augmented by computer-generated (CG) content, such as video or graphics. In Mixed Reality (MR), the CG content is not just overlaid on the top of a view of the real world, but really interacts with the real-world environment, so that digital and physical realities seamlessly blend together. In what follows, it will be referred to AR while encompassing both AR and MR for sake of brevity.

In AR applications, a virtual layer, overlaid on the top of the real view, can easily be used as a GUI to control other virtual elements. The task of controlling real objects such as contents displayed on a TV set via that kind of AR-based user interface is much more complex, as it requires tackling three aspects at an AR rendering device. First, this involves getting relevant information at the AR rendering device from the TV set, regarding the availability, status and available option of the latter. Secondly, the AR rendering device must be able to control the real objects. Thirdly, the GUI must be displayed in an appropriate way on screen.

In patent application US-2014/0317659 A1 to Datangle, Inc. (published on 23 October 2014), AR content corresponding to a TV program is obtained from a management server and displayed on a mobile device, together with a camera captured image of a TV screen on which the TV program is displayed. In this respect, local 3D coordinates of a TV frame containing the TV screen are determined, so that the AR content can be properly displayed beside a representation of the captured TV frame.

In patent US-8,646,000 B2 to LG Electronics, Inc. (published on 4 February 2014), an image display is controlled on a remote controller based on AR. Accordingly, a screen displays a content guide image based on content information obtained from searching, together with an image of an identified image display apparatus. The display may notably be configured so that determined information does not overlap with the captured display apparatus. In particular, a user may select on the screen an intended program listed in an EPG image (Electronic Program Guide) coming from the image display apparatus, and obtain the display on the screen of a thumbnail image corresponding to the selected program (Figure 17b).

Both disclosures above are offering flexible tools mixing TV viewing and AR GUI.

However, the real environment of the considered screen set, as represented on the second screen display together with added virtual contents, is disregarded. Now, that environment may be quite disturbing for the user when looking at information displayed beside the screen set. For example, a light environment background may be quite unsuited to light overlaid texts or images, or on the contrary, a dark environment background may render the viewing difficult for dark virtual contents. Also, some changing parts of the environment, e.g. a background mirror reflecting moving people, or switched lights, may spoil a quiet consideration of the displayed information.

A tempting solution for a skilled person would be to remove completely the environment external to the screen set on the second screen display. This would be in line with the known technologies above, and would get rid of prejudicial interferences when watching TV and obtaining the joint display of related information.

However, this solution usually requires a continuous and precise adaptation of the environment removal. Indeed, the positioning of the screen set on the second screen may be regularly changing over time, e.g. when the second screen belongs to an HMD (Head-Mounted Display) or to a handheld tablet. Also, the removal must avoid any cut in the screen set on one hand, and any residual pieces of the environment on the other hand. This makes necessary a precise determination of the screen set edges, which entails relatively demanding real-time computations.

In addition, the user may be reluctant to be completely deprived of his/her real world environment, notably when wearing an AR HMD. Even in case the apparatus comprising the second screen is occupying a limited area, which is generally the case with a tablet or a smartphone, the gap between the screen set visible on the second screen and the environment around the apparatus may not look user-friendly, due to the partial loss of a familiar and warm background.

### 3. SUMMARY

A purpose of the present disclosure is to enable advantageously a convenient visualization, on at least one second screen, of a real screen set containing first contents as well as of related virtual contents, while avoiding systematic removal of the real environment surrounding the screen set and allowing at the same time a user-friendly watching of the related virtual contents.

The disclosure is preferably directed to obtaining such convenient virtual contents subject to limited real-time computation costs.

In particular embodiments, the disclosure applies to a convenient remote control, notably for TV programs or video playing.

In this respect, an object of the present disclosure is notably a device for managing first contents displayed on a screen set, by using a management apparatus associated with at least one sensor and at least one second screen. The device comprises at least one processor configured for:
- controlling from images captured by the sensor(s) a joint visualization on the second screen(s) of the screen set including the first contents together with at least one virtual content corresponding to those first contents,
- adapting a layout of the virtual content(s) in function of the visualization of the screen set on the second screen(s), so that at least part of the virtual content(s) is visualized external to the screen set on the second screen(s).

According to the disclosure, the processor(s) is/are further configured for:
- analyzing an environment external to the screen set on the captured images, that environment being dependent on a user position and comprising at least one real object,
- adapting the layout of the virtual content(s) to be visualized, in function of the analyzed environment, including in function of the real object(s),
- controlling the joint visualization on the second screen(s) of the screen set, the external environment and the virtual content(s).

Though the sensor(s) is/are exploited for controlling the joint visualization of the screen set together with the virtual content(s) on the second screen(s), it deserves noting that in some embodiments, the visualization includes a representation of the screen set with its external environment that is obtained without using the sensor(s). Such a representation may indeed rely on a direct view, through transparent or translucent glasses being part of the second screen(s).

In other implementations, such a representation is obtained by the intermediary of one or more cameras capturing images of the real 3D scene, those images being visualized by a user on the second screen (indirect view).

Both AR/MR techniques are well known to persons having ordinary skills in the art and will not be developed here.

The present device makes it possible to always have the screen set in sight while managing the related first contents. In addition, by contrast with existing solutions and in a surprising way, the environment external to the screen set is taken into account in visualizing the virtual contents, instead of being disregarded, let alone removed. Namely, instead of being ignored or deemed as a potential hurdle to correct virtual content representation, the environment is taken as a user-friendly part of the available data and combined with the virtual contents.

An advantageous aspect of the present device is that it can possibly leave the representation of the external environment undisturbed, without requiring any complex image processing. The only efforts can thus be directed to the arrangement of the virtual contents, which may require significantly less computational efforts than would be the case with the environment.

In particular, the positioning of the virtual contents in the environment with respect to the real object(s), may not need a very high level of precision, as could be the case if the external environment were completely removed from visualization on the second screen, or if the environment were specially adapted for the visualization of virtual contents. For example, text arranged in an available space formed in the real object may support some limited positioning variations, due to movements of the user carrying the second screen(s), while remaining clearly visible to the user.

In variants, the visualization of the external environment and/or of the screen set is further submitted to processing, such as e.g. adjusting the visualized screen set captured in perspective so that it appears as a rectangular parallelepiped, or modifying the brightness of the real object as represented on the second screen(s).

The "visualization" of the screen set and external environment on the second screen(s) can cover any kinds of appropriate visualization, which includes in particular a direct see-through view of the real world encompassing the screen set and the environment, a 2D projection, a 3D view such as notably based on stereoscopy (e.g. with active glasses or contact lenses), and holograms.

The "visualization" or "display" of the virtual contents encompasses all kinds of relevant representations, including a 2D projection, a 3D view such as notably based on stereoscopy, and holograms.

The second screen can be a single one, in particular when a tablet is used. In other embodiments relying on stereoscopy, two second screens are exploited in combination, one for each of the user's eyes. This can be particularly advantageous in HMD arrangements. In further implementations, the second screens are two or more, respectively available to several users, even though a specific viewpoint corresponding to one of those users is privileged in analyzing the environment and adapting the layout of the virtual contents.

The real object(s) can consist in any object identified on the captured images based on the analysis of the environment.

The exploited sensor(s) can be embedded in the management apparatus. The sensor(s) can also be external to it, captured image data being then transmitted from the sensor(s) to the management apparatus as required.

The sensor(s) can consist in particular in one camera, or in two or more cameras. Such cameras can be of any kinds, including notably CCD (Charge-Coupled Device) and CMOS (Complementary Metal-Oxide-Semiconductor) cameras, infrared cameras, or sensors adapted to 3D rendering such as dual or stereo cameras or plenoptic cameras. Other types of sensors, such as e.g. based on ultrasonography, can also be exploited.

Adapting the layout of the virtual contents in function of the visualization of the screen set takes advantageously account of a position, a direction, a size and/or a shape of the visualized screen set.

In some implementations, adapting the layout includes avoiding overlaying or overlapping the real object(s) visualized on the second screen(s) with the virtual content(s).

This may happen if the real object must remain visible to the user (e.g. a family picture placed on a table or a clock visible on the wall) or if the object may be disturbing when only partly overlaid by the intended virtual contents (e.g. a dark object extending beyond a dark overlaid virtual content, or moving elements appearing off the overlaid virtual contents, e.g. a background window).

In other implementations, which can be combined with the previous ones when two or more real objects are considered, adapting the layout includes by contrast overlaying at least part of the real object(s) visualized on the second screen(s) with the virtual content(s).

The real object selected as desirable for the virtual content overlay can notably have a sufficiently large visible surface (e.g. a table, a wall, or a given part of them) compared with dimensions of the virtual contents to be displayed and/or an appropriate brightness (e.g. dark when the virtual contents are bright).

"Analyzing" the environment goes beyond merely looking at available space around the screen set on the second screen. It involves analyzing at least partly the substance of the environment, by at least identifying the real object(s) and determining features associated with that/those object(s). Such features may include notably dimensions, positions, shape, hue, color intensity and/or darkness/brightness.

"Managing" the first contents displayed on the screen set encompasses any kind of actions pertaining to those first contents. This can concern notably actions modifying those first contents, through a feedback effect of the device on the display of the first contents - in particular through remote control operations. This can also regard local effects on the second screen(s) obtained by the device without modifying the display on the screen set, such as e.g. displaying locally an EPG or enriched information about the currently available first contents. Advantageously, the device is adapted to offer, in a combined way, actions for modifying the first contents and others for providing related data and information while leaving the first contents undisturbed, thereby enabling to manage them remotely and locally.

Advantageously, the processor(s) is/are further configured for adapting at least one feature of the virtual content(s) to be visualized, in function of the analyzed environment, including in function of the real object(s).

This implementation makes possible to enhance the visibility of the virtual contents to the user, without having to change the external environment as captured by the sensor(s), and thereby potentially offers a still higher degree of adaptation of the virtual contents to the real scene including the screen set and the external environment.

For example, the virtual contents are adapted in function of the visualization of the real object(s) over which the virtual contents are overlaid, which can involve their brightness and/or their color, their scaling in function of the space available in the visualized real object, their shape in function of a shape of the real object and/or their splitting into two or more parts to be overlaid on visualizations of respectively two or more of the real objects.

Preferably, the processor(s) is/are configured for generating control instructions related to the first contents, in response to at least one user action applied to the virtual content(s).

Interactivity is thereby offered to the user via the virtual contents, which can in particular be useful for getting additional information on demand about the first contents.

More precisely, the control instructions are advantageously adapted to be remotely sent from said management apparatus to operate on the first contents displayed on the screen set.

The device can then play a role of remote control enabling to modify the ongoing first contents. This is notably relevant to a TV or STB remote control. Depending on the implementations, the control instructions can be sent notably to a TV set, an STB, a gateway or a server.

In particular embodiments, the processor(s) is/are configured for generating a first of the control instructions in response to at least one first of the user actions being applied jointly on the second screen(s) to a visualized target real object and to at least part of the virtual content(s) external to the target real object on the second screen(s).

In case the second screens are two or more, user actions being applied "on the second screens" encompass actions on a single one of the second screens, as well as combined actions on two or more of those second screens.

Also, the actions on the second screen(s) can be direct, e.g. a finger pressure on a touchscreen tablet, or indirect, e.g. a voice command or an interpreted gesture with an HMD.

In a first category of those embodiments, the target real object is the screen set.

In a second category of those embodiments, the target real object is at least partly external to the screen set on the second screen(s).

Those embodiments offer a large range of advantageous applications to the user, which notably offer the opportunity of having two or more alternative kinds of effects based on respective user actions.

For example, when the user selects a virtual icon and the TV set on the second screen(s), the channel is changed in agreement with that virtual icon. By contrast, if the user clicks twice on a virtual icon, information related to the concerned channel is displayed on screen, such as about broadcast programs and associated times. Also, when the user selects the virtual icon and a visualized neighboring table, the information is shown on the table, while when the user selects a virtual icon and a visualized wall, the information is shown on the wall.

In specific implementations of those particular embodiments, the virtual content(s) includes at least two image thumbnails and the first of the user actions include selecting and moving one of the image thumbnails onto the target real object on the second screen(s).

The actions of selecting and moving the image thumbnails consist advantageously in clicking and dragging the thumbnails, respectively.

In variants, the thumbnail selection and/or displacement are carried out by one or more voice commands and/or interpreted user gestures.

Preferably, adapting the layout is such that the first contents of the screen set are visible to a user on the second screen(s).

The disclosure also pertains to a remote control apparatus comprising at least one second screen and at least one sensor, further comprising a device for managing first contents according to any of the implementations above and for which the remote control apparatus is the management apparatus.

The remote control apparatus is preferably selected among a tablet, a smartphone and a headset.

Another object of the disclosure is a method for managing first contents displayed on a screen set, by using a management apparatus associated with at least one sensor and at least one second screen. The method comprises:
- controlling from images captured by the sensor(s) a joint visualization on the second screen of the screen set including the first contents together with at least one virtual content corresponding to the first contents,
- adapting a layout of the virtual content(s) in function of the visualization of the screen set on the second screen(s), so that at least part of the virtual content(s) is visualized external to the screen set on the second screen(s).

According to the disclosure, the method comprises:
- analyzing an environment external to the screen set on the captured images, that environment being dependent on a user position and comprising at least one real object,
- adapting the layout of the virtual content(s) to be visualized, in function of the analyzed environment, including in function of the real object(s),
- controlling the joint visualization on the second screen(s) of the screen set, at least part of the environment and the virtual content(s).

That method is advantageously executed by a device for managing first contents according to any of the implementation modes of the disclosure.

In addition, the disclosure relates to a computer program for managing first contents displayed on a screen set, comprising software code adapted to perform a method compliant with any of the above execution modes when the program is executed by a processor.

The present disclosure further pertains to a non-transitory program storage device, readable by a computer, tangibly embodying a program of instructions executable by the computer to perform a method for managing first contents displayed on a screen set, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### 4. LIST OF FIGURES

The present disclosure will be better understood, and other specific features and advantages will emerge upon reading the following description of particular and non-restrictive illustrative embodiments, the description making reference to the annexed drawings wherein:
- figure 1 is a block diagram representing schematically a device for managing first contents, compliant with the present disclosure;
- figure 2 represents a first implementation of a system including a TV set, a server and an AR rendering device comprising a device as shown on figure 1;
- figure 3 is a photograph showing a first example of application of the device of figure 1 involving a TV set and a TV remote control tablet;
- figures 4A, 4B and 4C represent execution steps of the first example of application of figure 3;
- figure 5A and 5B represent in execution a second example of application of the device of figure 1 involving a TV set and a TV remote control tablet;
- figure 6 represents a second implementation of a system including a TV set, a server and an AR rendering device comprising a device as shown on figure 1;
- figure 7 is a flow chart showing successive steps executed with the device of figure 1;
- figure 8 diagrammatically shows an AR apparatus comprising the device represented on figure 1.

On the figures, identical or similar elements are designated by the same references.

### 5. DESCRIPTION OF EMBODIMENTS

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

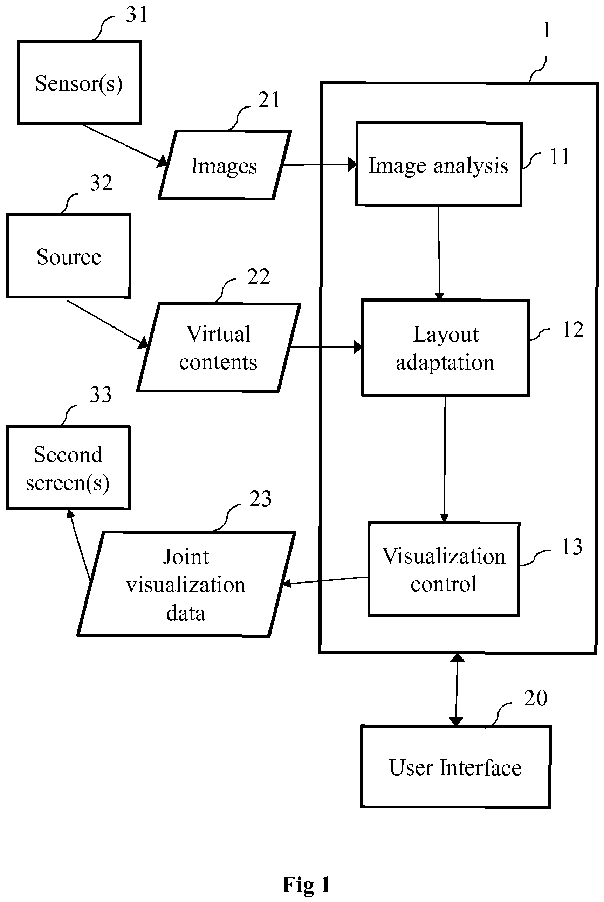

The present disclosure will be described in reference to a particular functional embodiment of device 1 for managing first contents, as illustrated on **Figure 1****.**

The device 1 is adapted to manage first contents displayed on a screen set, such as notably a TV set, by relying on a sensor or set of sensors 31 capturing images 21 that include the screen set and on one or more second screen 33. Those first contents are for example broadcast TV programs, video on demand (VOD), or other contents of interest for a user, such as e.g. weather or main news.

The device 1 is also adapted to superimpose virtual contents 22 (or AR/MR contents) to a visualization of a real 3D scene including the screen set, so as to generate joint visualization data 23 to be visualized on the second screen(s) 33. Those virtual contents 22 correspond to the first contents displayed on the screen set and are provided from an AR/MR source 32. They can include for example subtitles, a summary, additional assets or a virtual scene.

The real 3D scene can be obtained either directly through the second screen(s) 33 (direct view), or from images captured by one or more camera (indirect view), which is/are advantageously at least partly the sensor(s) 31.

The AR/MR source 32 can be notably a server, a broadcaster, or a local or remote database. Such a database can take the form of storage resources, available from any kind of appropriate storage means, which can be notably a RAM or an EEPROM (Electrically-Erasable Programmable Read-Only Memory) such as a Flash memory, possibly within an SSD (Solid-State Disk). In case the broadcaster is the source 32 of the virtual contents 22, it can provide those contents by an apparatus such as notably an STB (set-top box) or a gateway, which also provides the first contents for their display on the screen set.

The device 1 is advantageously an apparatus, or a physical part of an apparatus, designed, configured and/or adapted for performing the mentioned functions and produce the mentioned effects or results. In alternative implementations, the device 1 is embodied as a set of apparatus or physical parts of apparatus, whether grouped in a same machine or in different, possibly remote, machines.

In particular embodiments, the device 1, the sensor(s) 31 and the second screen(s) 33 are available in a single apparatus, such as notably a tablet, a smartphone or a HMD.

For sake of convenience, it is supposed below that the sensor 31 is unique and that a single second screen 33 is exploited. Embodiments involving two or more sensors 31 and/or two or more second screens 33, as disclosed above, are anyway within the scope of the present disclosure and within the reach of the person skilled in the art.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1.

The device 1 comprises a module 11 for analyzing the images 21 captured by the sensor 31, and for identifying thereon the targeted screen set as well as an environment external to that screen set.

It further comprises a module 12 for adapting a layout of the obtained virtual contents 22 in function of the visualization on the screen set of the second screen 33 as well as of the analyzed environment external to the screen set (hereinafter: "external environment"). The module 12 is adapting the layout so that at least part of the virtual contents 22 is displayed external to the screen set, and in function of the external environment. More precisely, one or several real objects being identified by the module 11 in the external environment, the layout is adapted in particular in function of that or those real object(s).

Advantageously, the module 12 is such that the first contents of the screen set are always visible and not hidden by the displayed virtual contents 22.

The external environment itself depends on the user position, a user being preferably carrying or wearing an apparatus including the second screen 33.

The device 1 also includes a module 13 for controlling the joint visualization, on the second screen 33, of the real 3D scene including the screen set and of the virtual contents 22, thereby providing an AR GUI. Based on the inputs from the module 12, the GUI layout is suited to the user's environment, further to being suited to the first contents.

The AR GUI can be composed of various layers of information.

Advantageously, the device 1 further provides the user with the possibility to control the first contents displayed on the screen set, via the AR GUI. Such an interactive capability can notably enable the user to switch the first contents by acting on that AR GUI.

In addition, information can be entered and retrieved by a user via a user interface 20 interacting with the device 1. The user interface 20 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

Several particular implementations of the device 1 are developed below.

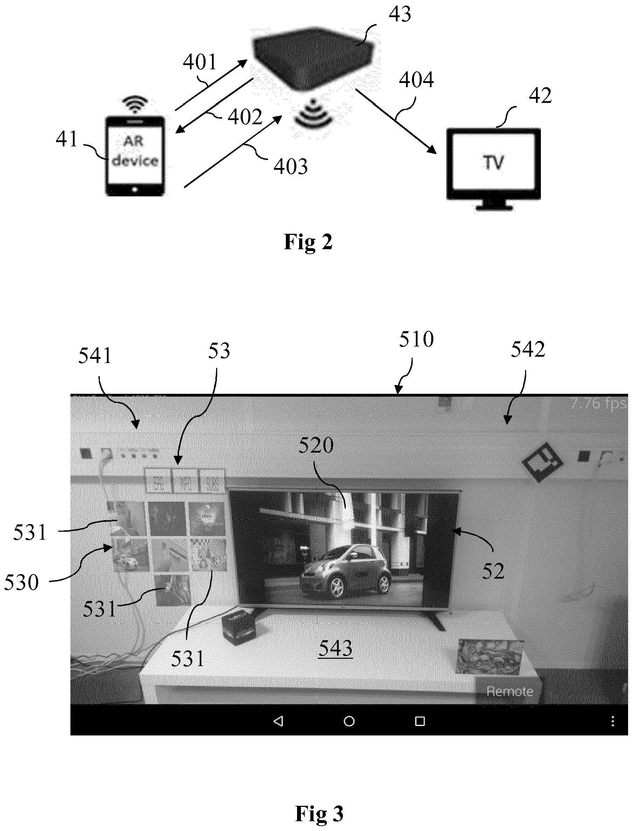

In a first implementation, represented on **Figure 2**, an AR rendering device 41 (which can be notably a phone, a tablet or a headset) includes the functionalities of the device 1, the sensor 31 and the second screen 33. The first contents are represented on the screen set of a TV set 42, which is receiving those contents and commands from a local server 43 such as e.g. an STB, via for example an HDMI cable (for High-Definition Multimedia Interface). The AR device 41 and the local server 43 are themselves remotely exchanging data, preferably via wireless communications such as e.g. through a WiFi connection (for Wireless Fidelity).

In operation, the AR device 41 (i.e. a user operating the AR device 41) requests information to the server 43 (communication operation 401). The server 43 sends to the AR device 41, automatically or on request, current TV contents and related metadata and/or other available contents such as notably TV programs, VOD or news (communication operation 402). The AR device 41 can also send to the server 43 commands for selecting TV contents (communication operation 403). The server 43 controls accordingly the contents displayed on TV (communication operation 404).

Those capabilities are more detailed below in particular implementations. For communication operation 401, when the AR device 41 is turned on, it sends a request to the server 43 asking for different kinds of information:
- name of the content currently being displayed on the TV;
- metadata associated with that current content, which include e.g. subtitles, a summary, reviews, casting data, related 3D assets and animation if available;
- a list of other available contents, such as notably broadcast programs, available VOD, news, weather.

The requested information by default can be only partial, and completed when specifically requested by the user.

In return (communication operation 402), the server 43 sends the requested information. It can be of different types: textual data, thumbnail images, icons, 3D scene and associated metadata.

In case 3D scenes are associated with the TV content, the user can ask for this extra content. The 3D scenes can then be obtained and displayed in AR using the AR device 41, synchronously with the displayed TV content.

The AR device 41 then creates a virtual user interface (UI) display composed of the various requested pieces of information, taking into account the current location of the TV set 42. In particular, the TV content is preferably not hidden by the GUI. The requested information can be only partially displayed, and completed if specifically requested by the user.

In a particular example, shown on **Figure 3**, the TV set 42 noted 52 comprises a TV screen on which contents 520 are displayed. The TV set 42 is surrounded by an external environment including notably a wall having a left side 541 and a right side 542 as seen from a user's viewpoint, and is sitting on a table 543. The TV set 52 and its external environment are observed via the AR device 41 such as e.g. a tablet, and visualized on a second screen 510 of that AR device. For sake of convenience only, the real objects visualized on that second screen 510, either by a direct or an indirect view, are designated with the same references as the real objects.

Virtual contents 53 are notably superimposed on the representation of the real world on the second screen 510, further to additional commands and information. Those virtual contents 53 comprise an array of thumbnails 531 composing a mosaic 530 that represents the available content, which is filled as soon as the list of available content is received by the AR device 41. In a variant implementation, the displayed thumbnails 531 are consisting in, or extracted from, a list of predetermined favorite channels or programs. Using TV detection and camera pose estimation, as well known to a person skilled in the art, the mosaic is automatically scaled and located so that the thumbnail images remain visible and do not overlap with the TV screen of the TV set 52. Default location is on a side of the TV. In the present example, enough space is available on the left part 541 of the wall, where the virtual contents 53 are displayed.

If the contents are more numerous than the templated mosaic tiles, several pages of thumbnails are generated and previous and next page buttons are additionally displayed. Each content is then advantageously indexed, so that each tile of the displayed page of mosaic is also associated with an index.

In another example, the display of subtitles is requested, and those subtitles are displayed below the TV set 42 if enough space is available, or even at the front of a table on which the TV set 42 is sitting, if enough space is available and if not too distant from the TV screen. Otherwise, the subtitles can be displayed at the bottom of the TV screen.

Other information can advantageously be arranged all around the TV set 42, such as textual or EPG (Electronic Program Guide) data.

From interactions with this GUI information, the user can request to the server 43, with the AR device 41, to switch content on the TV set 42.

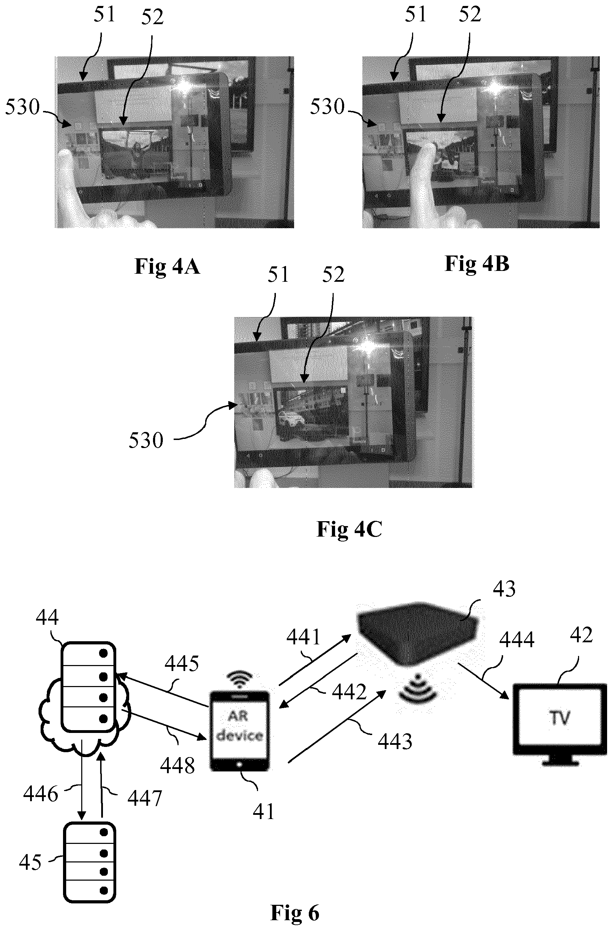

In operation, as shown on **Figures 4A, 4B and 4C** on which the particular AR device 41, noted 51, is visible, a user selects with a finger on the second screen 510 (touchscreen selection), one of the thumbnails 531 of the virtual contents 53 (Figure 4A), and drags it onto the representation of the screen of the TV set 52 (Figure 4B). He/She then drops that selected thumbnail 531 on the TV screen. When the final position of the operating user's finger is detected as being inside the TV screen, a command for switching the broadcast channel accordingly is sent to the server 43 (Figure 4C). Such a detection can be carried out by an on-line TV detection algorithm or by a pre-scan of the real scene, as known to a person skilled in the art. The TV content, being itself advantageously indexed, is switched to correspond to an index of the dragged thumbnail.

In a further example, the AR device 41 enables, by a single click on the image of the real TV set 42 through the AR device 41, to select a particular frame of the TV content, and the metadata associated with this frame can be displayed. Such metadata include for example actor names, movie scenarios and/or branded objects if any.

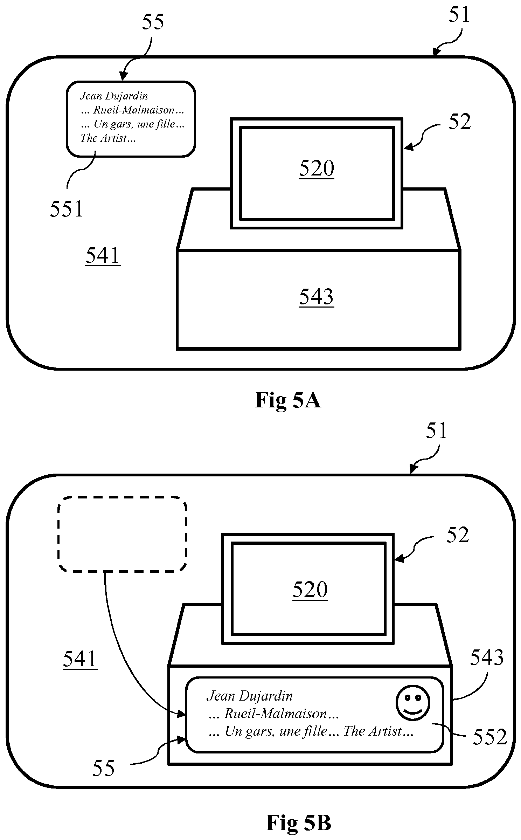

In another application example, shown on **Figures 5A and 5B**, virtual contents 55 displayed on the left part 541 of the wall beside the TV set 52 provide textual information 551 on a program currently displayed on that TV set 52, for instance about actors, characters or participants involved in that program (Figure 5A). By clicking on that textual information 551 and clicking then on the representation of the table 543 on the second screen 510 (touchscreen), the user can trigger a transfer of the related virtual information from the left part 541 of the wall onto the table 543 (Figure 5B). Also, further to an analysis of the shape, size and brightness of the table 543, the representation of the textual information 551 can be adapted and changed to another representation 552, which can for example be reshaped and resized, and include images or a video further to the textual information.

In particular embodiments, the real environment is scanned upstream and can be retrieved, which allows MR applications where virtual 3D assets interact with the real environment.

Such an environment scan can enable to establish an environment description by detecting and labeling the environment specificities, including notably the objects present in the environment (e.g. a table, a wall, a chair, a lamp) and the related available spaces. Scanning the environment can be achieved notably with a device equipped with a depth sensor such as a product commercialized under the name "Intel Real Sense", which provides a point cloud of the scanned scene.

The point cloud is then analyzed to detect and label the environment characteristics. Technical solutions for achieving that task are described in particular in the articles "Real-Time Plane Segmentation using RGB-D Cameras", by Dirk Holz, Stefan Holzer, Rady Bogdan Rusu and Sven Behnke in Proceedings of the 15th RoboCup International Symposium, Istanbul, July 2011; "Real-time 3D segmentation of cluttered scenes for robot grasping", by André Uckermann, Robert Haschke and Helge J. Ritter in Humanoids 2012, pp. 198-203; "Segment and Label Indoor Scene Based on RB-D for the Visually Impaired", by Zhe Whang, Hong Liu, Xiangdong Wang and Yueliang Qian in MultiMedia Modeling 2014, pp. 449-460; and "Three-dimensional point cloud plane segmentation in both structured and unstructured environments", by J. Xiao, J. Zhang, B. Adler, H. Zhang and J. Zhang in Robotics and Autonomous Systems 2013, 61 (12), pp. 1641-1652.

The analysis of the environment can also be achieved with a device such as commercialized under the name Microsoft Hololens, which outputs a 3D mesh. Some solutions enabling to retrieve environment characteristics from such a 3D mesh include those described in the articles "Mesh Based Semantic Modelling for Indoor and Outdoor Scenes", by Julien P. C. Valentin, Sunando Sengupta, Jonathan Warrel, Ali Shahrokni and Philip H. S. Torr in CVPR 2013*;* and "A survey on Mesh Segmentation Techniques", by Ariel Shamir in Computer Graphics forum, vol. 27, 2008, n. 6, pp. 1539-1556.

The analysis of the real-world information can either be embedded in the AR device 41 used to scan the scene, or run on a server.

In a variant embodiment, shown on **Figure 6**, the local server 43 is completed with an external AR asset management server 44, communicating with a broadcaster server 45. This proves particularly useful for 3D scenes associated with TV contents. Indeed, the user is then able to ask for extra content from the external server 44 with the AR rendering device 41, so that the 3D scenes are displayed on the AR device 41 synchronously with the TV contents displayed on the TV set 42.

In a particular operation, the AR device 41 (i.e. a user operating the AR device 41) sends to the server 43 a command for switching channel (communication operation 441). In response, the server 43 sends to the AR device 41 channel and clock time data (communication operation 442). The AR device 41 then sends a request to the local server 43 for content corresponding to current channel and current clock time, such as for instance an abstract or subtitles (communication operation 443). Also, the server 43 controls the channel switching of the TV set 42 as ordered (communication operation 444). In parallel, a request is sent by the AR device 41 to the external server 44 for retrieving associated extra AR content (communication operation 445). The external server 44 transmits the request to the broadcaster server 45 and obtains from the latter the desired data (communication operations 446 and 447), which are communicated to the AR device 41 (communication operation 448).

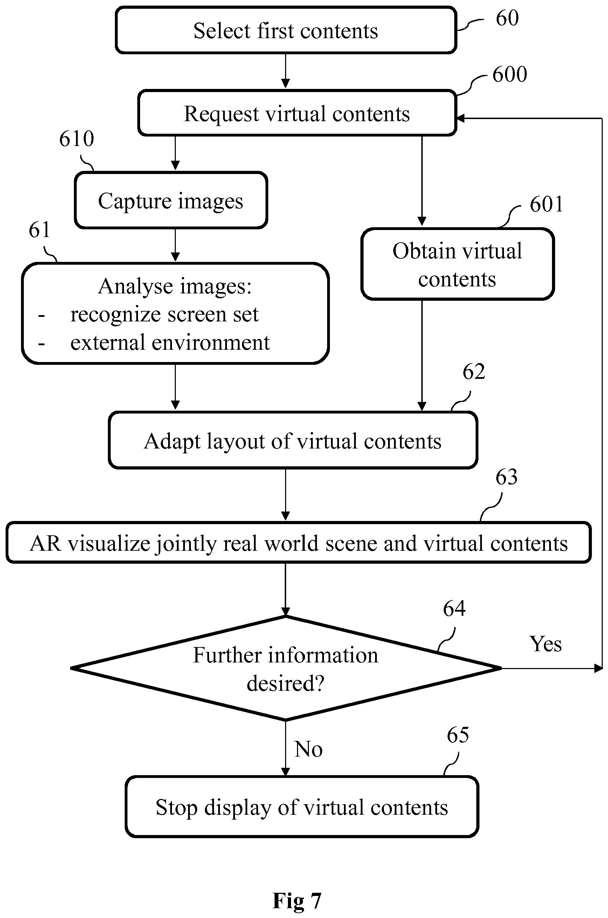

In execution, as illustrated on **Figure 7**, the device 1 proceeds preferably as follows in managing contents displayed on the screen set. First contents to be watched are selected at step 60 and related commands are transmitted in this respect for a corresponding display on the screen set (for example to the local server 43). Related virtual contents 22 are then requested at step 600 and obtained at step 601 (for example from the local server 43 or from the external server 44). In parallel, images 21 captured by the sensor 31 at step 610 are analyzed at step 61, so as to recognize the screen set and to get information on its external environment, including one or more real objects. The resulting virtual contents 22 and outputs of the image analysis are exploited together at step 62 in adapting a layout of the virtual contents 22, leading at step 63 to a joint visualization on the second screen 33. In this respect, at least part of the virtual contents 22 is visualized external to the screen set visible on the second screen 33, the layout of the virtual contents 22 being adapted in function of the analyzed external environment, and more precisely in function of the real object(s).

Those steps are repeated as long as further information is desired (check step 64), until the AR process is stopped (step 65).

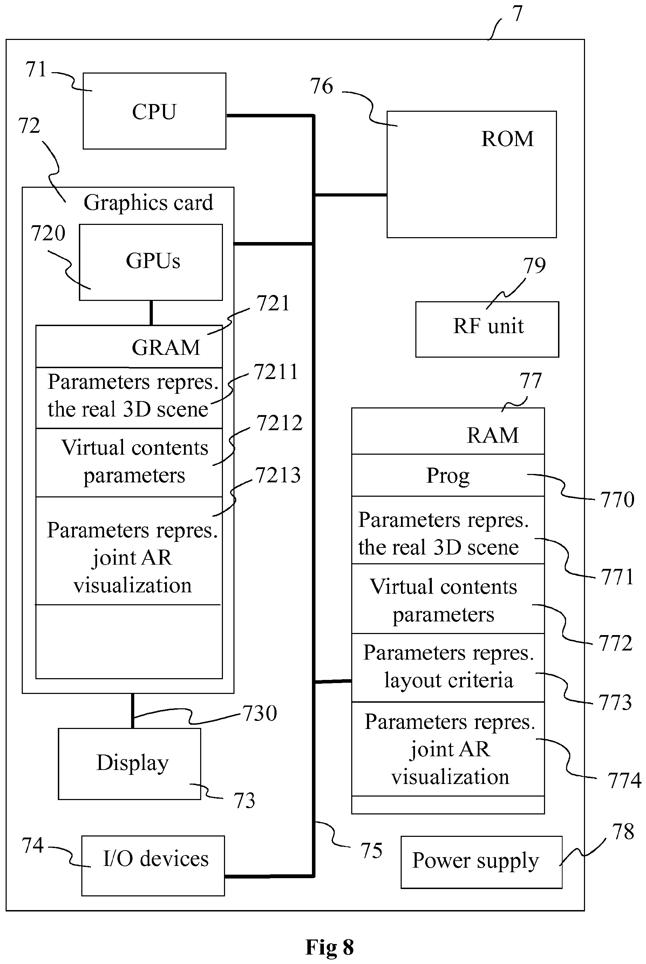

A particular apparatus 7, visible on **Figure 8**, is embodying the device 1 described above. It corresponds for example to a tablet, a smartphone, a head-mounted display (HMD), or a games console - such as a specialized games console producing and displaying images live. That apparatus 7 is suited to augmented reality, whether for direct view (the user is typically viewing the real 3D scene through a glass) or for indirect view (the user is viewing the real 3D scene displayed on a screen). Both capacities can also be combined.

The apparatus 7 comprises the following elements, connected to each other by a bus 75 of addresses and data that also transports a clock signal:
- a microprocessor 71 (or CPU) ;
- a graphics card 72 comprising several Graphical Processor Units (or GPUs) 720 and a Graphical Random Access Memory (GRAM) 721;
- a non-volatile memory of ROM type 76;
- a RAM 77;
- one or several I/O (Input/Output) devices 74 such as for example a keyboard, a mouse, a joystick, a webcam; other modes for introduction of commands such as for example vocal recognition are also possible;
- a power source 78 ; and
- a radiofrequency unit 79.

The apparatus 7 also comprises a display device 73 of display screen type directly connected to the graphics card 72 to display synthesized images calculated and composed in the graphics card, for example live. The use of a dedicated bus to connect the display device 73 to the graphics card 72 offers the advantage of having much greater data transmission bitrates and thus reducing the latency time for the displaying of images composed by the graphics card. According to a variant, a display device is external to apparatus 7 and is connected thereto by a cable or wirelessly for transmitting the display signals. The apparatus 7, for example through the graphics card 72, comprises an interface for transmission or connection adapted to transmit a display signal to an external display means such as for example an LCD or plasma screen or a video-projector. In this respect, the RF unit 79 can be used for wireless transmissions.

In an alternative implementation, the display device 73 corresponds to a glass through which the user is seeing the real environment, and the apparatus 7 further comprises an optical projection system (not represented), which enables to project e.g. generated virtual images or contents on the glass.

It is noted that the word "register" used in the description of memories 721 and 77 can designate in each of the memories mentioned, both a memory zone of low capacity (some binary data) as well as a memory zone of large capacity (enabling a whole program to be stored or all or part of the data representative of data calculated or to be displayed). Also, the registers represented for GRAM 721 can be arranged and constituted in any manner, and each of them does not necessarily correspond to adjacent memory locations and can be distributed otherwise (which covers notably the situation in which one register includes several smaller registers).

When switched-on, the microprocessor 71 loads and executes the instructions of the program contained in the RAM 77.

The random access memory 77 comprises notably:
- in a register 770, the operating program of the microprocessor 71 responsible for switching on the apparatus 7,
- in a register 771, parameters representative of the real 3D scene (for example models of the object(s) of the scene and lighting parameters), including of the screen set and external environment;
- in a register 772, parameters representative of virtual contents;
- in a register 773, parameters representative of layout criteria;
- in a register 774, parameters representative of a joint AR visualization involving the real 3D scene and the virtual contents.

The algorithms implementing the steps of the method specific to the present disclosure and described above are stored in the memory GRAM 721 of the graphics card 72 associated with the apparatus 7 implementing those steps. When switched on and once the parameters 771, 772 and 774 are loaded into the RAM 77, the graphic processors 720 of graphics card 72 load those parameters into the GRAM 721 and execute the instructions of those algorithms in the form of microprograms of "shader" type using HLSL (High Level Shader Language) language or GLSL (OpenGL Shading Language) for example.

The random access memory GRAM 721 comprises notably:
- in a register 7211, the parameters representative of the real 3D scene;
- in a register 7212, the parameters representative of the virtual contents;
- in a register 7213, the parameters representative of the joint AR visualization.

As will be understood by a skilled person, the presence of the graphics card 72 is not mandatory, and can be replaced with simpler visualization implementations.

According to another variant, the power supply 78 is external to the apparatus 1.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure. Also, elements of different implementations may be combined, supplemented, modified, or removed to produce other implementations. All those possibilities are contemplated by the present disclosure.

## Claims

1. A device (1, 7) for managing first contents (520) displayed on a screen set (42, 52), by using a management apparatus (41, 51) associated with at least one sensor (31) and at least one second screen (33, 510), said device comprising at least one processor configured for:
- controlling (13) from images (21) captured by said at least one sensor a joint visualization (23) on said at least one second screen of said screen set including said first contents together with at least one virtual content (22, 53, 55) corresponding to said first contents,
- adapting (12) a layout of said at least one virtual content in function of the visualization of said screen set on said at least one second screen, so that at least part of said at least one virtual content is visualized external to said screen set on said at least one second screen,
**characterized in that** said at least one processor is further configured for:
- analyzing (11) an environment external to said screen set on said captured images, said environment being dependent on a user position and comprising at least one real object (541, 542, 543),
- adapting (12) the layout of said at least one virtual content to be visualized, in function of said analyzed environment, including in function of said at least one real object,
- controlling (13) the joint visualization on said at least one second screen of said screen set, said environment and said at least one virtual content.

2. The device (1, 7) according to claim 1, **characterized in that** said at least one processor is further configured for adapting at least one feature (551) of said at least one virtual content (55) to be visualized, in function of said analyzed environment, including in function of said at least one real object (543).

3. The device (1, 7) according to claim 1 or 2, **characterized in that** adapting said layout includes avoiding overlaying or overlapping said at least one real object (543) visualized on said at least one second screen (510) with said at least one virtual content (53).

4. The device (1, 7) according to claim 1 or 2, **characterized in that** adapting said layout includes overlaying at least part of said at least one real object (543) visualized on said at least one second screen with said at least one virtual content (55).

5. The device (1, 7) according to any of the preceding claims, **characterized in that** said at least one processor is configured for generating control instructions related to said first contents, in response to at least one user action applied to said at least one virtual content.

6. The device (1, 7) according to claim 5, **characterized in that** said control instructions are adapted to be remotely sent from said management apparatus (41, 51) to operate on said first contents (520) visualized on said screen set (42, 52).

7. The device (1, 7) according to claim 5 or 6, **characterized in that** said at least one processor is configured for generating a first of said control instructions in response to at least one first of said at least one user action being applied jointly on said at least one second screen (510) to a visualized target real object (52, 543) and to at least part of said at least one virtual content (531, 551) external to said target real object on said at least one second screen.

8. The device (1, 7) according to claim 7, **characterized in that** said target real object is said screen set (52).

9. The device (1, 7) according to claim 7, **characterized in that** said target real object (543) is at least partly external to said screen set (52) on said at least one second screen.

10. The device (1, 7) according to any of claims 7 to 9, **characterized in that** said at least one virtual content (53) includes at least two image thumbnails (531) and said at least one first of said at least one user action includes selecting and moving one of said image thumbnails onto said target real object (52) on said at least one second screen (510).

11. The device (1, 7) according to any of the preceding claims, **characterized in that** adapting the layout is such that said first contents (520) of said screen set (52) are visible to a user on said at least one second screen (510).

12. A remote control apparatus (41, 51) comprising at least one second screen (33, 510) and at least one sensor (31), characterized it further comprises a device (1, 7) for managing first contents according to any of claims 1 to 11 and for which said remote control apparatus is said management apparatus, said remote control apparatus being preferably selected among a tablet, a smartphone and a headset.

13. A method for managing first contents displayed on a screen set (42, 52), by using a management apparatus (41, 51) associated with at least one sensor (31) and at least one second screen (33, 510), said method comprising:
- controlling (63) from images (21) captured by said at least one sensor a joint visualization (23) on said at least one second screen of said screen set including said first contents together with at least one virtual content (22, 53, 55) corresponding to said first contents,
- adapting (62) a layout of said at least one virtual content in function of the visualization of said screen set on said at least one second screen, so that at least part of said at least one virtual content is visualized external to said screen set on said at least one second screen,
**characterized in that** said method comprises:
- analyzing (61) an environment external to said screen set on said captured images, said environment being dependent on a user position and comprising at least one real object (541, 542, 543),
- adapting (62) the layout of said at least one virtual content to be visualized, in function of said analyzed environment, including in function of said at least one real object,
- controlling (63) the joint visualization on said at least one second screen of said screen set, said environment and said at least one virtual content.

14. The method according to claim 13, **characterized in that** said method is executed by a device (1, 7) for managing first contents according to any of claims 1 to 11.

15. A computer program for managing first contents displayed on a screen set, comprising software code adapted to perform a method compliant with claim 13 or 14 when the program is executed by a processor.
